(19) Europäisches Patentamt / European Patent Office / Office européen des brevets

(11) **EP 4 768 539 A1**

(12) **EUROPEAN PATENT APPLICATION**
published in accordance with Art. 153(4) EPC

(43) Date of publication:
01.07.2026 Bulletin 2026/27

(21) Application number: 24856408.0

(22) Date of filing: 16.08.2024

(51) International Patent Classification (IPC):
C08L 51/04 (2006.01)   C08L 53/02 (2006.01)
C08L 69/00 (2006.01)   C08L 91/00 (2006.01)

(52) Cooperative Patent Classification (CPC):
C08L 51/04; C08L 53/02; C08L 69/00; C08L 91/00

(86) International application number:
PCT/JP2024/029175

(87) International publication number:
WO 2025/041719 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.08.2023 JP 2023135398

(71) Applicant: NOF Corporation
Tokyo 150-6012 (JP)

(72) Inventor: OTORA, Shun
Chita-gun, Aichi 470-2373 (JP)

(74) Representative: Hoffmann Eitle
Patent- und Rechtsanwälte PartmbB
Arabellastraße 30
81925 München (DE)

(54) **THERMOPLASTIC RESIN COMPOSITION AND THERMOPLASTIC RESIN MOLDED ARTICLE**

(57) A thermoplastic resin composition containing: a thermoplastic resin (L); a paraffin-based hydrocarbon solvent (M); and a styrene-based elastomer (N), wherein the thermoplastic resin (L) is one or more selected from the group consisting of a polycarbonate resin and a resin containing, as structural units, a rubber-based polymer, a vinyl cyanide-based monomer, and an aromatic vinyl-based monomer, the paraffin-based hydrocarbon solvent (M) has an aniline point of 110°C or higher, and the styrene-based elastomer (N) is a block copolymer containing a polymer block having polystyrene and a polymer block having a conjugated diene compound. The thermoplastic resin composition has excellent silent properties while maintaining or improving the low-temperature impact resistance of the thermoplastic resin.

EP 4 768 539 A1

**Description**

TECHNICAL FIELD

The present invention relates to a thermoplastic resin composition and a thermoplastic resin molded article.

BACKGROUND ART

Thermoplastic resins are excellent in impact resistance, processability, dimensional stability, and mechanical properties, and are therefore used in a wide range of fields such as housings of electric and electronic, interior and exterior parts of automobiles, building materials, furniture, musical instruments, and sundries. Further, extrusion molded articles (molded bodies) are widely used as various display devices and protective parts in the interior of automobiles by being subjected to additional secondary processing such as coating, lamination, or surface decoration.

Among thermoplastic resins, polycarbonate (hereinafter, PC) resins, mixed resins of polycarbonate (hereinafter, PC/ABS (acrylonitrile-butadiene-styrene), and ABS resins are excellent in impact resistance, processability, flame resistance, and heat resistance. These resins are used as materials for automobile parts, precision machines, OA equipment, and the like. However, when the molded articles of the resins are combined, squeaking noise may occur due to contact between the resins. Therefore, under an environment where quietness is required, there is a demand for silent properties (effect of suppressing squeaking noise) such as reduction (suppression) of squeaking noise.

As a method for improving the silent properties of the thermoplastic resin composition, Patent Document 1 discloses a thermoplastic resin composition containing: an ethylene-alkyl acrylate copolymer; a graft copolymer composed of an ethylene-alkyl acrylate copolymer, an alkyl (meth)acrylate copolymer, and an aromatic vinyl monomer; and a styrene-based elastomer.

In recent years, in order to reduce the load on the environment, electrification has been advanced in the automobile industry, and the quiet performance of the power source is dramatically improved as compared with the engine vehicle. As a result, the quietness of the environment inside the vehicle is also progressing, and the demand for silent properties is also increasing.

PRIOR ART DOCUMENTS

PATENT DOCUMENT

Patent Document 1: WO 2020/162494

SUMMARY OF THE INVENTION

PROBLEMS TO BE SOLVED BY THE INVENTION

On the other hand, thermoplastic resins for automobile parts are used in a wide range of temperature conditions such as an engine area where temperature changes drastically, cold regions and tropical regions. In recent years, from the viewpoint of safety in the vehicle at the time of collision, impact resistance particularly in a low temperature environment has been demanded. However, there has been found a new problem that impact resistance (low-temperature impact resistance) under a low-temperature environment deteriorates in a resin composition whose silent properties have been improved by the conventional method. The thermoplastic resin composition described in Patent Document 1 has insufficient low-temperature impact resistance, and there has been a demand for further improvement.

In view of the above circumstances, an object of the present invention is to provide a thermoplastic resin composition and a thermoplastic resin molded article that have excellent silent properties while maintaining or improving the low-temperature impact resistance of the thermoplastic resin.

MEANS FOR SOLVING THE PROBLEMS

That is, the present invention has the following configurations.

[1] A thermoplastic resin composition containing: a thermoplastic resin (L); a paraffin-based hydrocarbon solvent (M); and a styrene-based elastomer (N), wherein the thermoplastic resin (L) is one or more selected from the group consisting of a polycarbonate resin and a resin containing, as structural units, a rubber-based polymer, a vinyl cyanide-based monomer, and an aromatic vinyl-based monomer, the paraffin-based hydrocarbon solvent (M) has an aniline point of 110°C or higher, and the styrene-based elastomer (N) is a block copolymer containing a polymer block having polystyrene and a polymer block having a conjugated diene compound.

[2] The thermoplastic resin composition according to [1], wherein a ratio of the paraffin-based hydrocarbon solvent (M) is 1.5 to 8.0 parts by weight based on 100 parts by weight of the thermoplastic resin (L), a ratio of the styrene-based elastomer (N) is 1.0 to 6.0 parts by weight based on 100 parts by weight of the thermoplastic resin (L), and a weight ratio ((M)/(N)) of the paraffin-based hydrocarbon solvent (M) to the styrene-based elastomer (N) is 1 or more.

[3] A thermoplastic resin molded article containing the thermoplastic resin composition according to [1] or [2].

EFFECT OF THE INVENTION

In the present invention, by containing one or more thermoplastic resins (L) selected from the group consisting of a polycarbonate resin and a resin containing, as structural units, a rubber-based polymer, a vinyl cyanide-based monomer, and an aromatic vinyl-based monomer, a paraffin-based hydrocarbon solvent (M) having an aniline point of 110°C or higher, and a styrene-based elastomer (N), it is possible to obtain a thermoplastic resin composition and a thermoplastic resin molded article that have excellent silent properties while maintaining or improving the low-temperature impact resistance of the thermoplastic resin.

MODE FOR CARRYING OUT THE INVENTION

<Thermoplastic resin composition>

The thermoplastic resin composition of the present invention contains a thermoplastic resin (L), a paraffin-based hydrocarbon solvent (M), and a styrene-based elastomer (N).

<Thermoplastic resin (L)>

The thermoplastic resin (L) is one or more selected from the group consisting of a polycarbonate resin and a resin containing, as structural units, a rubber-based polymer, a vinyl cyanide-based monomer, and an aromatic vinyl-based monomer. The thermoplastic resin (L) may be used singly or in combination of two or more of them.

The polycarbonate resin is not limited to a specific type. For example, an aromatic polycarbonate produced by a known phosgene method, a melting method, or the like is used. Specific production methods are described in, for example, JP-A-63-215763 and JP-A-2-124934. Representative diphenols used as raw materials include 2,2-bis(4-hydroxyphenyl) propane (so-called bisphenol A). Examples of the precursor for introducing carbonate include phosgene and diphenyl carbonate. As the produced polycarbonate resin, one in which the terminal OH group is capped and one in which the terminal OH group is not capped are usable.

The resin containing, as structural units, a rubber-based polymer, a vinyl cyanide-based monomer, and an aromatic vinyl monomer is obtained by, for example, a method in which a monomer component containing the vinyl cyanide-based monomer, the aromatic vinyl-based monomer, and another optional copolymerizable monomer added if necessary is subjected to graft polymerization in the presence of the rubber-based polymer. Examples of a method used for the polymerization include well-known methods such as bulk polymerization, solution polymerization, suspension polymerization, and emulsion polymerization.

Examples of the rubber-based polymer include a diene-based rubber, an acrylic rubber, and an ethylene-propylene-based rubber. Examples of the diene-based rubber include a polybutadiene rubber, an acrylonitrile-butadiene copolymer rubber, a styrene-butadiene copolymer rubber, and a polyisoprene rubber. Examples of the acrylic rubber include: acrylic rubbers containing, as a structural unit, an $\alpha,\beta$-unsaturated carboxylic acid such as acrylic acid or methacrylic acid; and acrylic rubbers containing, as a structural unit, an $\alpha,\beta$-unsaturated carboxylic acid ester such as methyl methacrylate, ethyl methacrylate, t-butyl methacrylate, or cyclohexyl methacrylate. Examples of the ethylene-propylene-based rubber include EPR and EPDM. These rubber-based polymers may be used singly or in combination of two or more of them.

Examples of the vinyl cyanide monomer include acrylonitrile and methacrylonitrile. Among them, acrylonitrile is preferred. These vinyl cyanide monomers may be used singly or in combination of two or more of them.

Examples of the aromatic vinyl monomer include styrene, $\alpha$-methyl styrene, o-methyl styrene, m-methyl styrene, p-methyl styrene, and p-t-butyl styrene. Among them, styrene and $\alpha$-methyl styrene are preferred. These aromatic vinyl monomers may be used singly or in combination of two or more of them.

Examples of the other copolymerizable monomer include: $\alpha,\beta$-unsaturated carboxylic acids such as acrylic acid and methacrylic acid; $\alpha,\beta$-unsaturated carboxylic acid esters such as methyl methacrylate, ethyl methacrylate, t-butyl methacrylate, and cyclohexyl methacrylate; imide compounds of an $\alpha,\beta$-unsaturated dicarboxylic acid such as maleic anhydride and itaconic anhydride. These other copolymerizable monomers may be used singly or in combination of two or more of them.

Examples of the resin containing, as structural units, a rubber-based polymer, a vinyl cyanide-based monomer, and an aromatic vinyl-based monomer include an ABS resin, an ASA resin, and an AES resin.

Examples of the ABS-based resin include an acrylonitrile-butadiene-styrene copolymer, an acrylonitrile-butadiene-styrene-$\alpha$-methyl styrene copolymer, and an acrylonitrile-butadiene-styrene-N-phenylmaleimide copolymer.

When the thermoplastic resin (L) is a mixed resin of a resin containing, as structural units, a rubber-based polymer, a vinyl cyanide-based monomer, and an aromatic vinyl-based monomer, and a PC resin, the content of the PC resin is preferably 50 to 95 parts by weight based on 100 parts by weight of the total. As a result, a thermoplastic resin composition particularly excellent in mechanical properties is obtained.

<Paraffin-based hydrocarbon solvent (M)>

The paraffin-based hydrocarbon solvent (M) is classified based on %CP which is the percentage of the paraffin carbon number in the total carbon in ring analysis (n-d-M method, ASTM D3238-85) frequently used for base oil composition analysis. The %CP is preferably 50% or more, more preferably 60% or more, and still more preferably 70% or more. Furthermore, the %CP is preferably 90% or less, and more preferably 85% or less. That is, in the paraffin-based hydrocarbon solvent (M), the %CP is preferably 50% or more and 90% or less, more preferably 60% or more and 85% or less, and still more preferably 70% or more and 85% or less.

From the viewpoint of the low-temperature impact resistance of the thermoplastic resin composition, the paraffin-based hydrocarbon solvent (M) has an aniline point (JIS K2256) of 110°C or higher, preferably 115°C or higher, and more preferably 120°C or higher. The aniline point is preferably 150°C or lower, and more preferably 140°C or lower. That is, from the viewpoint of the low-temperature impact resistance of the thermoplastic resin composition, the paraffin-based hydrocarbon solvent (M) has an aniline point of preferably 115°C or higher and 150°C or lower, and more preferably 120°C or higher and 140°C or lower.

Furthermore, from the viewpoint of the low-temperature impact resistance of the thermoplastic resin composition, the paraffin-based hydrocarbon solvent (M) preferably has a kinematic viscosity (JIS K2283) at 100°C of 20 mm$^2$/s or more, and more preferably 25 mm$^2$/s or more. The kinematic viscosity at 100°C is preferably 100 mm$^2$/s or less, and more preferably 50 mm$^2$/s or less. That is, from the viewpoint of the low-temperature impact resistance of the thermoplastic resin composition, the paraffin-based hydrocarbon solvent (M) preferably has a kinematic viscosity at 100°C of 20 mm$^2$/s or more and 100 mm$^2$/s or less, more preferably 25 mm$^2$/s or more and 50 mm$^2$/s or less.

The content of the paraffin-based hydrocarbon solvent (M) in the thermoplastic resin composition is preferably 1.5 to 8.0 parts by weight, more preferably 2.0 to 6.0 parts by weight, and still more preferably 2.5 to 5.0 parts by weight or more based on 100 parts by weight of the thermoplastic resin (L) from the viewpoint of improving low-temperature impact resistance.

<Styrene-based elastomer (N)>

The styrene-based elastomer (N) is a block copolymer containing a polymer block D mainly containing polystyrene and a polymer block E mainly containing a conjugated diene compound. Examples of the styrene-based elastomer (N) include block copolymers having structures such as D-E, D-E-D, E-D-E-D, and D-E-D-E-D. The styrene-based elastomer (N) preferably has two or more polymer blocks D in its molecule from the viewpoint of moldability. In the polymer block E, the mode of binding between the conjugated diene compounds is not particularly limited, and they may be bound together in any mode. When the molecule has two or more polymer blocks E, the polymer blocks E may have the same structure or different structures. Such styrene-based elastomers (N) may be used singly or in combination of two or more of them,

The hydrogenation ratio (the ratio of the number of bonds having been turned into C-C single bonds by hydrogenation with respect to the number of C-C double bonds in a block copolymer of polystyrene and a conjugated diene compound before hydrogenation) of the styrene-based elastomer (N) is not particularly limited, but is usually 50 parts by weight or more, preferably 70 parts by weight or more, and more preferably 90 parts by weight or more.

Examples of the styrene-based elastomer (N) include a styrene-isoprene-styrene block copolymer (SIS), a styrene-butadiene-styrene block copolymer (SBS), a styrene-ethylene-butene block copolymer (SEB), a styrene-ethylene-propylene block copolymer (SEP), a styrene-ethylene-butene-styrene block copolymer (SEBS), a styrene-ethylene-propylene-styrene copolymer block (SEPS), a styrene-ethylene-ethylene-propylene-styrene block copolymer (SEEPS), and a styrene-vinyl(ethylene-propylene)-styrene copolymer (V-SEPS). Among them, a styrene-ethylene-butene-styrene block copolymer (SEBS) and a styrene-ethylene-propylene-styrene block copolymer (SEPS) are preferable from the viewpoint of improving silent properties.

It is to be noted that the thermoplastic resin composition according to the present invention may use various compounding agents. Examples of the compounding agents include: fibrous reinforcing materials such as ceramic fibers (CF), glass fibers, aramid fibers, potassium titanate fibers, crushed mineral fibers, silica fibers, alumina fibers, plaster fibers, magnesium hydroxide fibers, silicon carbide fibers, and zirconia fibers; various shape organic or inorganic fillers such as spherical silica, mica, wollastonite, calcium carbonate, kaolin, clay, bentonite, sericite, glass beads, glass flakes, alumina, calcium silicate, magnesium carbonate, talc, zinc oxide, titanium oxide, iron oxide, graphite, carbon black, molybdenum disulfide, and ultra-high-density polyethylene; lubricants such as mineral oils, hydrocarbons, fatty acids, fatty acid esters, fatty acid amides, alcohols, metallic soaps, natural waxes, and silicone; PTFE-based processing aids and acrylic processing aids; inorganic flame retardants such as magnesium hydroxide and aluminum hydroxide; organic flame retardants such as halogen-based flame retardants and phosphorus-based flame retardants; antioxidants, UV protective agents, light stabilizers, coloring agents, antistatic agents, crosslinking agents, dispersing agents, coupling agents, foaming agents, and coloring agents.

The content of the styrene-based elastomer (N) in the thermoplastic resin composition is preferably 1.0 to 6.0 parts by weight, more preferably 1.5 to 5.0 parts by weight, and still more preferably 1.5 to 4.0 parts by weight based on 100 parts by weight of the thermoplastic resin (L) from the viewpoint of improving silent properties and low-temperature impact resistance.

In the thermoplastic resin composition, the weight ratio ((M)/(N)) of the paraffin-based hydrocarbon solvent (M) to the styrene-based elastomer (N) is preferably 1 or more, more preferably 1.5 or more, and preferably 3 or less from the viewpoint of improving low-temperature impact resistance. That is, in the thermoplastic resin composition, the weight ratio ((M)/(N)) of the paraffin-based hydrocarbon solvent (M) to the styrene-based elastomer (N) is preferably 1 or more and 3 or less, and more preferably 1.5 or more and 3 or less from the viewpoint of improving the low-temperature impact resistance.

The thermoplastic resin composition of the present invention can be obtained by melt-kneading the thermoplastic resin (L), the paraffin-based hydrocarbon solvent (M), the styrene-based elastomer (N), and any of the various compounding agents. The melt kneading may be performed by, for example, a method using a kneading machine such as a Banbury mixer, a kneader, a kneading extruder, a twin-screw extruder, or a roll. The above-described components may be added in any order and kneaded or may be added at a time and kneaded. The number of times of kneading may be either once or two or more times. The time of kneading depends on, for example, the size of a kneading machine to be used, but may usually be about 3 to 10 minutes. The discharge temperature of the kneading machine is preferably 150 to 350°C, and more preferably 180 to 250°C.

A thermoplastic resin molded article according to the present invention is obtained by molding the above-described thermoplastic resin composition into a predetermined shape. A molding method is not particularly limited, and examples thereof include injection molding and extrusion molding. The heating temperature for molding, the pressure and time of molding, etc. can appropriately be set. The thermoplastic resin molded article is excellent in silent properties and low-temperature impact resistance, and thus can be used as electric parts, electronic parts, mechanical parts, precision device parts, or automobile parts.

EXAMPLES

Hereinbelow, the present invention will be described in more detail with reference to Examples, but the present invention is not limited only to these Examples.

<Production of thermoplastic resin composition>

<Example 1>

As the thermoplastic resin (L), 100 g of a PC/ABS resin (product name: "Multilon T-2711J", manufactured by Teijin Limited), 3.0 g of a paraffin-based hydrocarbon solvent (M) (product name: "SUNFLEX2280", manufactured by Japan Sun Oil Company, Ltd.), and 2.0 g of a styrene-based elastomer (N) (product name: Kraton G1651, manufactured by Kraton Corporation) were dry-blended. Thereafter, the dry blend was melt-kneaded (kneading conditions... screw rotation speed: 100 rpm, feeder rotation speed: 10 rpm, extrusion temperature: 220 to 240°C, discharge amount: 3.5 kg/h) using a twin screw extruder (PCM-30: manufactured by Ikegai Co., Ltd.). Then, a strand-shaped resin composition was obtained and then cut into pellets (pellet size (diameter of cut surface): 1.0 to 3.0 mm) to obtain a thermoplastic resin composition.

<Examples 2 to 8 and Comparative Examples 1 to 4>

Thermoplastic resin compositions were produced in the same manner as in Example 1 except that the types of the raw materials and the blending amounts (parts by weight) thereof were changed as shown in Tables 1 to 3.

The thermoplastic resin compositions of Examples and Comparative Examples obtained above were evaluated by the following evaluation methods, and the results are shown in Tables 2 and 3.

<Evaluation of silent properties>

The pellets obtained above were subjected to injection molding (barrel temperature: 250 to 260°C, mold temperature: 80°C) to prepare an evaluation specimen (length: 60 mm × width: 100 mm × thickness: 2 mm). Then, the specimen (material to be evaluated) was cut to obtain a plate for the test of the silent properties (55 mm × 80 mm × 2 mm), and burrs were removed from the plate. Then, the plate was left to stand at a temperature of 25°C and a humidity of 50%RH for 12 hours, and further left to stand at a temperature of 80°C and a humidity of 50%RH for 300 hours. As the counterpart material, a thermoplastic resin (L) was subjected to injection molding and used. Then, the plate for the test of silent properties and the plate for the counterpart material were fixed to a stick slip test stand SSP-04 manufactured by Ziegler. The plate and the counterpart material were rubbed against each other under conditions of a load of 40 N and a speed of 1 mm/s to measure the risk value of squeaking noise. The silent properties were evaluated based on the following criteria.

Risk value of squeaking noise 1: The risk of squeaking noise generation is extremely low (◎).

Risk value of squeaking noise 2 to 3: The risk of squeaking noise generation is low (○).

Risk value of squeaking noise 4 to 10: The risk of squeaking noise generation is high (×).

The thermoplastic resin molded article of the present invention was targeted to have a risk value of squeaking noise of 3 or less in the above evaluation of silent properties.

<Evaluation of low-temperature impact resistance>

The pellets and the thermoplastic resin (L) obtained above were subjected to injection molding (barrel temperature: 250 to 260°C, mold temperature: 80°C) to prepare a notched specimen (length: 80 mm × width: 10 mm × thickness: 4 mm). The Charpy impact strength (unit: $kJ/m^2$) at -30°C was measured for the specimen in accordance with ISO179. Then, the impact strength retention rate (%) was calculated by Equation (1), and evaluation was performed according to the following criteria.

Impact strength retention rate (%) = {(impact strength of thermoplastic resin composition/impact strength of thermoplastic resin (L)) × 100} ··· (Equation (1))          (Equation (1))

◎: The impact strength retention rate (%) is 110% or more.
○: The impact strength retention rate (%) is 90% or more and less than 110%.
×: The impact strength retention rate (%) is less than 90%.

The thermoplastic resin molded article of the present invention was targeted to have an impact strength retention rate (%) of 90% or more.

[Table 1]

|  |  | Type | Aniline point (°C) | Kinematic viscosity (100°C, $mm^2$/s) | %CP |
|---|---|---|---|---|---|
| M1 | SUNFLEX2280 | Paraffin-based | 122.4 | 31.7 | 71 |
| M2 | SUNPAR2280 | Paraffin-based | 132.7 | 31.4 | 71 |
| M'1 | SUNPAR110 | Paraffin-based | 104.3 | 4.2 | 67 |
| M'2 | SUNTHENE4240 | Naphthene-based | 87.9 | 18.3 | 45 |

[Table 2]

| | | | Example 1 | Example 2 | Example 3 | Example 4 | Example 5 | Example 6 | Example 7 | Example 8 |
|---|---|---|---|---|---|---|---|---|---|---|
| Thermoplastic resin composition | Thermoplastic resin (L) | L1 | 100 | 100 | 100 | 100 | | | 100 | 100 |
| | | L2 | | | | | 100 | | | |
| | | L3 | | | | | | 100 | | |
| | Paraffin-based hydrocarbon solvent (M) | M1 | 3.0 | 4.0 | 3.0 | 2.0 | 3.0 | 3.0 | | 3.0 |
| | | M2 | | | | | | | 3.0 | |
| | | M'1 | | | | | | | | |
| | Naphthene-based hydrocarbon solvent | M'2 | | | | | | | | |
| | Styrene-based elastomer (N) | N1 | 2.0 | 1.5 | 3.0 | 2.0 | 2.0 | 2.0 | 2.0 | |
| | | N2 | | | | | | | | 2.0 |
| | (M) / (N) | | 1.5 | 2.7 | 1.0 | 1.0 | 1.5 | 1.5 | 1.5 | 1.5 |
| | Silent properties | | 1 | 3 | 1 | 2 | 2 | 2 | 2 | 2 |
| | | | ⊙ | c | ⊙ | ○ | ○ | ○ | ○ | ○ |
| Low temperature impact properties | Impact strength retention rate (%) | | 125 | 116 | 102 | 110 | 95 | 105 | 110 | 112 |
| | | | ⊙ | ⊙ | ○ | ⊙ | ○ | ○ | ⊙ | ⊙ |

[Table 3]

| | | | Comparative Example 1 | Comparative Example 2 | Comparative Example 3 | Comparative Example 4 |
|---|---|---|---|---|---|---|
| Thermoplastic resin composition | Thermoplastic resin (L) | L1 | 100 | 100 | 100 | 100 |
| | | L2 | | | | |
| | | L3 | | | | |
| | Paraffin-based hydrocarbon solvent (M) | M1 | | | 3.0 | |
| | | M2 | | | | |
| | | M'1 | 3.0 | | | |
| | Naphthene-based hydrocarbon solvent | M'2 | | 3.0 | | |
| | Styrene-based elastomer (N) | N1 | 2.0 | 2.0 | | 2.0 |
| | | N2 | | | | |
| | (M) / (N) | | 1.5 | 1.5 | - | - |
| Silent properties | | | 2 | 2 | 5 | 2 |
| | | | ○ | ○ | × | ○ |
| Low temperature impact properties | Impact strength retention rate (%) | | 72 | 82 | 100 | 56 |
| | | | x | × | ○ | × |

In Tables 1 to 3

L1 represents a PC/ABS resin (manufactured by Teijin Limited, product name "MultilonT-2711J", low-temperature impact resistance grade);

L2 represents a PC/ABS resin (manufactured by Toray Industries, Inc., product name "TOYOLACPX10-X07", standard grade);

L3 represents an ABS resin (manufactured by Techno-UMG Co., Ltd., product name "UMGABS EX141", standard grade) ;

M1 represents a paraffin-based hydrocarbon solvent (manufactured by Japan Sun Oil Company, Ltd., product name "SUNFLEX2280", aniline point: 122.4°C, kinematic viscosity (100°C): 31.7 mm$^2$/s, %CP: 71%);

M2 represents a paraffin-based hydrocarbon solvent (manufactured by Japan Sun Oil Company, Ltd., product name "SUNPAR2280", aniline point: 132.7°C, kinematic viscosity (100°C): 31.4 mm$^2$/s, %CP: 71%);

M'1 represents a paraffin-based hydrocarbon solvent (manufactured by Japan Sun Oil Company, Ltd., product name "SUNPAR110", aniline point: 104.3°C, kinematic viscosity (100°C): 4.2 mm$^2$/s, %CP: 67%);

M'2 represents a naphthene-based hydrocarbon solvent (manufactured by Japan Sun Oil Company, Ltd., product name "SUNTHENE4240", aniline point: 87.9°C, kinematic viscosity (100°C): 18.3 mm$^2$/s, %CP: 45%);

N1 represents a styrene-ethylene-butylene-styrene (SEBS) block copolymer (manufactured by Kraton Corporation, product name "Kraton G1651"); and

N2 represents a styrene-ethylene-propylene-styrene (SEPS) block copolymer (manufactured by Kuraray Co., Ltd., product name "SEPTON 2006");.

In the thermoplastic resin compositions of Examples 1 to 8, evaluation results satisfying the target values of the silent properties and the low-temperature impact resistance were obtained.

In Comparative Example 1, in which the paraffin-based hydrocarbon solvent (M'1) had a low aniline point, the low-temperature impact resistance was poor.

In Comparative Example 2, in which the naphthene-based hydrocarbon solvent (M'2) having a low aniline point was contained instead of the paraffin-based hydrocarbon solvent (M), the low-temperature impact resistance was poor.

In Comparative Example 3, which did not contain the styrene-based elastomer (N), the silent properties were poor.

In Comparative Example 4, which did not contain the paraffin-based hydrocarbon solvent (M), the low-temperature impact resistance was poor.

**Claims**

1. A thermoplastic resin composition comprising:

   a thermoplastic resin (L);
   a paraffin-based hydrocarbon solvent (M); and
   a styrene-based elastomer (N), wherein
   the thermoplastic resin (L) is one or more selected from the group consisting of a polycarbonate resin and a resin containing, as structural units, a rubber-based polymer, a vinyl cyanide-based monomer, and an aromatic vinyl-based monomer,
   the paraffin-based hydrocarbon solvent (M) has an aniline point of 110°C or higher, and
   the styrene-based elastomer (N) is a block copolymer containing a polymer block having polystyrene and a polymer block having a conjugated diene compound.

2. The thermoplastic resin composition according to claim 1, wherein

   a ratio of the paraffin-based hydrocarbon solvent (M) is 1.5 to 8.0 parts by weight based on 100 parts by weight of the thermoplastic resin (L),
   a ratio of the styrene-based elastomer (N) is 1.0 to 6.0 parts by weight based on 100 parts by weight of the thermoplastic resin (L), and
   a weight ratio ((M)/(N)) of the paraffin-based hydrocarbon solvent (M) to the styrene-based elastomer (N) is 1 or more.

3. A thermoplastic resin molded article comprising the thermoplastic resin composition according to claim 1 or 2.

## INTERNATIONAL SEARCH REPORT

| International application No. |
| --- |
| **PCT/JP2024/029175** |

**A.    CLASSIFICATION OF SUBJECT MATTER**

*C08L 51/04*(2006.01)i; *C08L 53/02*(2006.01)i; *C08L 69/00*(2006.01)i; *C08L 91/00*(2006.01)i
FI:    C08L51/04; C08L69/00; C08L53/02; C08L91/00

According to International Patent Classification (IPC) or to both national classification and IPC

**B.    FIELDS SEARCHED**

Minimum documentation searched (classification system followed by classification symbols)

C08L51/04; C08L53/02; C08L69/00; C08L91/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | CN 104119653 A (MITAC PRECISION TECHNOLOGY (KUNSHAN) CORP.) 29 October 2014 (2014-10-29)<br>claims, examples | 1-3 |
| X | JP 2017-214479 A (HENKEL JAPAN LTD.) 07 December 2017 (2017-12-07)<br>claims, examples 12, 13 | 1 |
| X | JP 2001-247742 A (RIKEN VINYL INDUSTRY CO., LTD.) 11 September 2001 (2001-09-11)<br>claims, examples 1-8, 11-19 | 1,3 |
| X | JP 2018-35298 A (MCPP INNOVATION LLC) 08 March 2018 (2018-03-08)<br>claims, examples 4, 5 | 1,3 |
| A | JP 2019-99592 A (HENKEL JAPAN LTD.) 24 June 2019 (2019-06-24)<br>entire text | 1-3 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 768 539 A1**

## INTERNATIONAL SEARCH REPORT

| International application No. |
| --- |
| **PCT/JP2024/029175** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2017-57323 A (JX NIPPON OIL & ENERGY CORP.) 23 March 2017 (2017-03-23) all drawings | 1-3 |
| A | JP 2013-74596 A (BRIDGESTONE CORPORATION) 22 April 2013 (2013-04-22) entire text | 1-3 |

Form PCT/ISA/210 (second sheet) (July 2022)

**INTERNATIONAL SEARCH REPORT**
**Information on patent family members**

International application No.

**PCT/JP2024/029175**

| Patent document cited in search report | | | Publication date (day/month/year) | Patent family member(s) | | | Publication date (day/month/year) |
|---|---|---|---|---|---|---|---|
| CN | 104119653 | A | 29 October 2014 | (Family: none) | | | |
| JP | 2017-214479 | A | 07 December 2017 | US | 2019/0040289 | A1 | |
| | | | | claims, examples 12, 13 | | | |
| | | | | US | 2022/0145142 | A1 | |
| | | | | WO | 2017/209309 | A1 | |
| | | | | EP | 3464466 | A1 | |
| JP | 2001-247742 | A | 11 September 2001 | (Family: none) | | | |
| JP | 2018-35298 | A | 08 March 2018 | (Family: none) | | | |
| JP | 2019-99592 | A | 24 June 2019 | US | 2020/0283616 | A1 | |
| | | | | claims, examples | | | |
| | | | | WO | 2019/107461 | A1 | |
| | | | | EP | 3717566 | A1 | |
| JP | 2017-57323 | A | 23 March 2017 | (Family: none) | | | |
| JP | 2013-74596 | A | 22 April 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020162494 A
- JP 63215763 A
- JP 2124934 A